## Europäisches Patentamt
## European Patent Office
## Office européen des brevets

(19)

(11) Numéro de publication: **0 097 552 B1**

(12)

# FASCICULE DE BREVET EUROPEEN

(45) Date de publication du fascicule du brevet:
08.01.86

(51) Int. Cl.⁴: **B 01 J 29/26,** C 10 G 45/12

(21) Numéro de dépôt: 83401092.8

(22) Date de dépôt: 31.05.83

(54) Nouveau catalyseur à base de mordénite fortement désaluminée.

(30) Priorité: 23.06.82 FR 8211132

(43) Date de publication de la demande:
04.01.84 Bulletin 84/1

(45) Mention de la délivrance du brevet:
08.01.86 Bulletin 86/2

(84) Etats contractants désignés:
BE DE GB IT NL

(56) Documents cités:
EP - A - 0 000 812
EP - A - 0 031 675
FR - A - 1 553 934
GB - A - 1 134 015
US - A - 3 480 539
US - A - 3 549 520
US - A - 3 663 430
US - A - 3 673 267
US - A - 4 077 909

(73) Titulaire: **INSTITUT FRANCAIS DU PETROLE, 4, Avenue de Bois-Préau, F-92502 Rueil-Malmaison (FR)**

(72) Inventeur: **Dufresne, Pierre, 3, avenue Lavoisier, F-92500 Rueil Malmaison (FR)**
Inventeur: **Freund, Edouard, 33, rue Cramail, F-92500 Rueil Malmaison (FR)**
Inventeur: **Marcilly, Christian, 91 ter rue Condorcet, F-78800 Houilles (FR)**
Inventeur: **Raatz, Francis, 17, rue Michelet, F-92500 Rueil Malmaison (FR)**

ACTORUM AG

## Description

La présente invention concerne l'utilisation d'un nouveau catalyseur zéolithique notamment pour l'amélioration de la tenue au froid et l'hydrodésulfuration d'un gas-oil moyen.

Le catalyseur objet de la présente invention est constitué d'un support acide à base de mordénite fortement désaluminée, sur lequel est déposée une combinaison des oxydes de métaux du groupe VI et du groupe VIII de la classification périodique des éléments.

La mordénite acide fortement désaluminée est une mordénite forme hydrogène, dans laquelle une partie des sites négatifs de la charpente peut éventuellement être neutralisée par des cations de métaux alcalino-terreux, $Be^{2+}$ et/ou $Mg^{2+}$ notamment, et/ou par au moins l'un des cations de métaux de terres rares suivants: $La^{3+}$, $Ce^{3+}$, $Nd^{3+}$, $Pr^{3+}$. Cette mordénite est caractérisée par un rapport molaire $SiO_2/Al_2O_3$ supérieur ou égal à 110 et de préférence compris entre 110 et 2000 et par une teneur en sodium inférieure ou égale à 0,5% en poids.

Cette mordénite désaluminée est obtenue par une série de traitements qui ont pour but de modifier la charpente aluminosilicatée en extrayant sélectivement l'aluminium. Ces traitements qui consistent d'une part à attaquer la zéolithe dans une solution chaude d'un acide minéral fort concentré (on réalisera un ou plusieurs traitements à l'acide) et d'autre part à calciner cette zéolithe au-delà de 450° C en présence de vapeur d'eau, sont appliqués le plus souvent alternativement à la zéolithe et répétés jusqu'à obtention du rapport $SiO_2/Al_2O_3$ désiré. L'attaque acide est en général réalisée entre 50 et 150° C dans une solution aqueuse d'un acide minéral fort tel que HCl, $NO_3H$ ou $SO_4H_2$ (concentration: de préférence 0,1 à 10N), pendant une durée comprise entre 15 min et 50 h. La calcination est réalisée entre 450 et 750° C en présence d'une pression partielle de vapeur d'eau comprise entre 40 Torr (1 Torr = 133,32 Pa) et 1 mégapascal (10 bar) pendant une durée comprise entre 15 min et 24 h et de préférence entre 30 min et 8 h. La série de traitements peut commencer par l'un ou l'autre de ces deux traitements, attaque acide et calcination en présence de vapeur d'eau mais de meilleurs résultats ont été obtenus dans la présente invention en commençant par une ou même plusieurs attaques acides successives. La première calcination sous air humide doit de préférence être réalisée à une température inférieure à 550° C, mais en revanche, les calcinations suivantes peuvent être réalisées à des températures supérieures pouvant même atteindre 700-750° C à partir de la troisième calcination.

La mordénite forme sodique de départ utilisée pour préparer les formes acides désaluminées peut être une mordénite à petites ouvertures du type de celle commercialisée par la Société Française La Grande Paroisse sous l'appellation «Alite 150» et caractérisée par une ouverture effective de pores de l'ordre de 0,4 nm, ou une mordénite à larges ouvertures du type de celle commercialisée par la Société Américaine Norton sous l'appellation «Zeolon» et caractérisée par une ouverture effective de pores de l'ordre de 0,7 nm. La première adsorbe moins de 0,8% en poids de benzène à température ambiante sous 25 Torr (0,033 bar) de pression alors que la seconde en adsorbe entre 7 et 9% en poids. Ces deux zéolithes lorsqu'elles sont sous forme H fortement désaluminée ($SiO_2/Al_2O_3 > 110$) donnent des résultats sensiblement équivalents.

La mordénite acide désaluminée ainsi obtenue est une mordénite forme hydrogène. Les ions de métaux alcalino-terreux et/ou de métaux terres rares mentionnés précédemment sont introduits par échange ionique de la mordénite désaluminée forme hydrogène dans une solution des sels métalliques appropriés.

La mordénite ainsi obtenue est mélangée intimement à une poudre humide d'un gel d'alumine ou de silice-alumine. Le mélange est ensuite mis en forme par exemple par extrusion au travers d'une filière. La teneur en mordénite du support ainsi obtenu doit être supérieure à 50% et de préférence comprise entre 50 et 90% et plus particulièrement entre 55 et 90 ou mieux entre 58 et 85. La mise en forme peut être réalisée avec d'autres matrices que l'alumine ou la silice-alumine, telles que silice-magnésie, alumine-oxyde de bore, etc., et avec une technique autre que l'extrusion telle que pastillage, dragéification, etc.

Le support acide, contenant une mordénite acide désaluminée, ainsi obtenu, est associé à une combinaison d'au moins un oxyde d'un métal du groupe VI et d'au moins un oxyde d'un métal du groupe VIII et de manière préférée aux couples $MoO_3 - NiO$ et $WO_3 - NiO$. La concentration (par rapport au catalyseur) en oxyde de métal VI est comprise, en poids, entre 6 et 35% et en oxyde de métal VIII est comprise, en poids, entre 2 et 16%. Ces oxydes de métaux sont déposés par exemple par imprégnation du support par des solutions de molybdate ou de tungstate d'ammonium et par une solution d'un sel de nickel. Le sel de nickel peut être déposé après une première imprégnation du sel du métal du groupe VI, suivie d'une calcination entre 200 et 500° C, ou être déposé en même temps que le sel du métal du groupe VI. Les sels de nickel préférés sont le nitrate, le formiate et l'acétate. Après la dernière imprégnation, le catalyseur est séché entre 80 et 300° C puis calciné entre 400 et 650° C et de préférence entre 500 et 600° C. Les teneurs en NiO et $MoO_3$ ou $WO_3$ du catalyseur final sont situées à l'intérieur des fourchettes suivantes:

NiO: entre 2 et 16% en poids et de préférence entre 4 et 12%

$MoO_3$: entre 6 et 35% en poids et de préférence entre 8 et 25%

$WO_3$: entre 6 et 35% en poids et de préférence entre 8 et 30%

La teneur éventuelle en au moins un métal tel que Be, Mg, La, Ce, Nd et Pr est de préférence inférieure à 2% en poids.

Ce catalyseur est utilisé notamment pour améliorer la tenue au froid de diverses coupes pétrolières, kérosènes, huiles lubrifiantes, et surtout de gas-oils moyens caractérisés par un point initial compris généralement entre 180 et 320°C et un point final compris entre 320 et 420°C, une teneur en soufre comprise généralement entre 0,5 et 3,5% en poids; un point d'écoulement et un point de trouble généralement supérieurs à 0°C. Un des avantages de ce catalyseur est de permettre d'obtenir simultanément une amélioration de la tenue au froid et une hydrodésulfuration importante de la coupe pétrolière considérée.

Les conditions opératoires sont de préférence les suivantes:

— pression entre 1,0 et 10,0 mégapascals et de préférence entre 2 et 7 mégapascals;
— température entre 300 et 460°C et de préférence entre 330 et 430°C;
— vitesse spatiale (VVH) en volume de charge par unité de volume de catalyseur et par heure entre 0,2 et 3 et de préférence entre 0,3 et 2;
— rapport volumique $H_2$/gas-oil compris entre 200 l/l et 1500 l/l et de préférence entre 300 et 1000 l/l.

L'utilisation du catalyseur objet de la présente invention dans les conditions décrites ci-dessus permet des améliorations de points d'écoulement et de point de trouble supérieurs à 10°C et souvent supérieurs à 20°C et des taux de désulfuration supérieurs à 90% et souvent supérieurs à 95%.

Les exemples qui suivent illustrent la présente invention.

*Exemple 1 (comparatif):*

*Préparation d'une zéolithe peu désaluminée base du catalyseur A*

Une mordénite forme sodique en poudre de la Société Norton («Zeolon 100 Na») est soumise à deux attaques acides successives dans les conditions suivantes:

— volume de solution en litre/poids de mordénite sèche en kg = 10
— acide utilisé: acide chlorhydrique
— concentration de la solution de HCl utilisée: 2N
— température: 85°C
— durée: 4 h.

La mordénite forme H issue de ces traitements a un rapport molaire $SiO_2/Al_2O_3 = 21$ et une teneur résiduelle en sodium de 0,13% en poids. Elle est lavée abondamment pour éliminer la plus grande partie des ions Cl⁻, séchée, mise sous forme d'extrudés de 2 mm de diamètre après mélange intime avec une poudre de gel d'alumine. Le support obtenu contient 60% en poids de zéolithe.

Ce support est imprégné successivement par des solutions de molybdate d'ammonium puis de nitrate de nickel avec les concentrations permettant d'atteindre des teneurs en $MoO_3$ et NiO sur le catalyseur final, respectivement de 15 et 6% en poids. Les deux imprégnations sont séparées par un séchage de 2 h à 300°C. Le catalyseur final est calciné 2 h à 520°C.

*Exemple 2 (comparatif):*

*Préparation d'une zéolithe désaluminée base du catalyseur B*

La mordénite forme H issue des deux attaques acides réalisées dans l'exemple 1 est soumise à une calcination de 3 h à 500°C en présence d'air contenant 50% d'eau. Elle est ensuite de nouveau soumise à une attaque acide identique aux deux premières, puis à une nouvelle calcination sous air humide identique à la précédente. La zéolithe forme H ainsi obtenue est caractérisée par un rapport $SiO_2/Al_2O_3$ égal à 56 environ et par une teneur en sodium de 0,01%. Elle est mélangée ensuite à un gel d'alumine, mise sous forme d'extrudés puis imprégnée par des sels de molybdène et de nickel dans des conditions et avec des quantités strictement identiques à celles de l'exemple 1.

*Exemple 3:*

*Préparation d'une zéolithe très désaluminée base du catalyseur C*

La mordénite désaluminée de l'exemple précédent (2) caractérisée par un rapport $SiO_2/Al_2O_3$ voisin de 56, obtenue à l'issue de deux attaques acides, une calcination sous air humide, une troisième attaque acide et enfin une seconde calcination sous air humide, est soumise à une nouvelle attaque acide dans les mêmes conditions que les précédentes puis à une nouvelle calcination sous air humide identique aux deux précédentes. La zéolithe acide forme hydrogène ainsi obtenue est caractérisée par un rapport $SiO_2/Al_2O_3$ égal à 115 et par une teneur en sodium de 0,003% en poids. Elle est mélangée ensuite à un gel d'alumine, mise sous forme d'extrudés puis imprégnée par des sels de molybdène et de nickel dans des conditions et avec des quantités strictement identiques à celles des exemples 1 et 2.

*Exemple 4:*

*Préparation d'une zéolithe très désaluminée base du catalyseur D*

La mordénite désaluminée forme H obtenue à l'issue de l'exemple 3 (après la succession des traitements suivants: deux attaques acides, une calcination sous air humide, une attaque acide, une calcination sous air humide, une nouvelle attaque acide et une troisième calcination sous air humide) est soumise à une cinquième attaque acide identique aux précédentes et à une quatrième calcination sous air humide.

La zéolithe acide forme hydrogène ainsi obtenue est caractérisée par un rapport $SiO_2/Al_2O_3$ voisin de 350 et par une teneur en sodium de 0,001% en poids. Elle est ensuite mélangée à un gel d'alumine, mise sous forme d'extrudés, puis imprégnée par des sels de molybdène et de nickel dans des conditions et avec des quantités strictement identiques à celles des exemples 1, 2 et 3.

*Exemple 5:*

*Préparation d'un catalyseur E similaire au catalyseur C, différent seulement de ce dernier par la*

température de la seconde calcination sous air humide et par la suppression de la troisième calcination

Une mordénite forme H obtenue à l'issue du premier exemple (deux attaques acides) est calcinée pendant 3 h à 500°C sous air contenant 50% de vapeur d'eau, soumise à une nouvelle attaque acide identique aux précédentes, ensuite calcinée à 600°C sous air contenant 50% de vapeur d'eau et enfin soumise à une dernière et quatrième attaque acide dans les mêmes conditions que précédemment.

Cette zéolithe est mélangée à un gel d'alumine, mise sous forme d'extrudés et enfin imprégnée par des sels de molybdène et de nickel dans des conditions et avec des quantités strictement identiques à celles des précédents exemples 1 à 4.

### Exemple 6:

*Préparation d'un catalyseur F similaire au catalyseur E et contenant du magnésium*

La mordénite acide désaluminée utilisée pour la fabrication du catalyseur E est échangée deux fois successivement dans une solution 0,5M d'acétate de magnésium à 20°C pendant 5 h. La zéolithe obtenue qui contient 0,4% en poids de magnésium est ensuite utilisée pour préparer le catalyseur F dans des conditions strictement identiques à celles de l'exemple 5 (catalyseur E).

### Exemple 7:

*Préparation d'un catalyseur G similaire au catalyseur C, différent seulement de ce dernier par le remplacement du molybdène par du tungstène*

Le support acide (mordénite H désaluminée + alumine) utilisé pour la préparation du catalyseur C est imprégné successivement dans les mêmes conditions que celles de l'exemple 3 par des solutions de sels de tungstène et de nickel dans des quantités nécessaires au dépôt de 6% de NiO et 15% de $WO_3$.

### Exemple 8 (comparatif):

*Préparation d'un catalyseur H similaire au catalyseur C, différent seulement de ce dernier par la nature de la fonction hydrogénante, un métal noble (le platine) remplaçant l'association $MoO_3$ + NiO*

La zéolithe désaluminée en poudre obtenue dans l'exemple 3 pour la préparation du catalyseur C est plongée et agitée dans un volume V de solution aqueuse, tel que le rapport de V en centimètres cubes et du poids P en grammes de zéolithe sèche soit égal à 6. On ajoute progressivement à cette solution en 2 h une quantité de nitrate de platine tétramine $(NO_3)_2$ $Pt(NH_3)_3$, telle que la quantité totale de platine mise en jeu au cours de l'opération représente 0,8% en poids de la zéolithe.

Ce produit est ensuite mélangé à un gel d'alumine, mis sous forme d'extrudés contenant 60% en poids de mordénite, puis séché à 150°C pendant 5 h et calciné sous air très sec pendant 3 h à 530°C.

### Exemple 9:

*Préparation d'un catalyseur I similaire au catalyseur C, préparé à partir d'une mordénite forme sodique à petites ouvertures*

Une préparation identique à celle du catalyseur C est effectuée à partir de la mordénite forme sodique à petites ouvertures commercialisée par la Société Française La Grande Paroisse sous l'appellation «Alite 150» (au lieu de «Zeolon 100 Na» commercialisé par Norton pour les catalyseurs A à H).

La mordénite acide désaluminée utilisée dans ce neuvième exemple est caractérisée par une adsorption du benzène supérieure à 7% en poids à température ambiante et sous 25 Torr (0,033 bar) de pression.

### Exemple 10:

*Essai des catalyseurs A, B, C, D, E, F, G, H et I pour l'amélioration des point de trouble et point d'écoulement, et l'hydrodésulfuration d'un gas-oil moyen atmosphérique*

La charge utilisée pour ces essais est un gas-oil moyen atmosphérique dont les caractéristiques principales sont présentées dans le tableau 1 et qui est caractérisé notamment par des points de trouble et d'écoulement de +21°C et une teneur en soufre de 2,05% en poids.

*Le catalyseur est utilisé dans les conditions suivantes:*

— pression totale = 40 bar (4 mégapascals)
— vitesse spatiale d'alimentation (VVH) en volume de charge par unité de volume de catalyseur et par heure = 1
— rapport volumique $H_2$/gas-oil = 500 l/l
— température variable entre 360 et 420°C.

Le catalyseur est préalablement réduit à l'hydrogène à 240°C pendant 1 h puis sulfuré à l'aide d'une charge de gas-oil léger d'intervalle de distillation 210-340 contenant en poids 2% de soufre sous forme de diméthyldisulfure (DMDS) pendant 8 h à VVH 2 à 350°C.

La température du test est augmentée progressivement de 10 en 10°C à partir de 360°C jusqu'à obtention d'une amélioration du point d'écoulement d'au moins +15°C et/ou du point de trouble de +10°C. La meilleure température, inférieure ou égale à 420°C, permettant, si possible, d'obtenir des performances au moins égles à ces dernières, est ensuite conservée pendant environ 200 h pour juger de la stabilité du catalyseur.

*Les performances du catalyseur sont exprimées à l'aide des caractéristiques suivantes:*

— rendement pondéral en coupe $200^+$ (Rdt $200^+$)
— point de trouble et point d'écoulement de la coupe $200^+$ (PT $200^+$, PE $200^+$)
— taux de désulfuration: % HDS.

Le point de trouble correspond à la température à laquelle apparaissent les premiers cristaux de paraffines. Le point d'écoulement correspond à la température de prise en masse du produit.

Les résultats obtenus à l'aide des catalyseurs A, B, C, D, E, F, G, H et I sur la charge de gas-oil moyen atmosphérique présentée dans le tableau 1, sont rassemblés dans le tableau 2.

*Tableau 1*

| Caractéristiques de la charge = gas-oil moyen atmosphérique | | |
|---|---|---|
| Distillation: (° C) | Pt initial 10% 30% 50% 70% 90% 100% | 280 320 336 344 351 362 370 |
| Densité | 20° C | 0,8805 |
| Viscosité | 40° C 50° C 100° C | 11,1 cSt ($11,1 \times 10^{-6}$m²/s) 8,1 cSt ($8,1 \times 10^{-6}$m²/s) 2,8 cSt ($2,8 \times 10^{-6}$m²/s) |
| Indice réfraction | 20° C | 1,4919 |
| Point d'aniline ° C | | 76,2 |
| Point d'éclair vase clos ° C | | 144 |
| Couleur ASTM | | 1 |
| Soufre % poids | | 2,05 |
| Azote ppm | | 360 |
| Point écoulement ° C | | + 21 |
| Point trouble ° C | | + 21 |

*Tableau 2*

| Catalyseurs | A | B | C | D | E | F | G | H | I |
|---|---|---|---|---|---|---|---|---|---|
| T° C | 420 | 405 | 395 | 390 | 395 | 395 | 395 | 420 | 400 |
| Rdt 200⁺ %pds  10 h | 90,8 | 78,7 | 78,7 | 77,7 | 78,1 | 79,1 | 78,8 | 91,1 | 79,3 |
| 50 h | 90,1 | 79,5 | 77,3 | 77,9 | 78,3 | 79,5 | 79,1 | 90,0 | 80,1 |
| 100 h | 91,3 | 78,9 | 78,4 | 78,0 | 79,1 | 77,9 | 79,0 | 89,2 | 79,1 |
| 200 h | 91,1 | 79,1 | 78,8 | 77,8 | 78,3 | 78,5 | 78,7 | 90,5 | 79,5 |
| PT 200⁺  10 h | +15 | +6 | +3 | +3 | +3 | 0 | +3 | +15 | 0 |
| 50 h | +12 | +3 | 0 | +3 | 0 | 0 | 0 | +18 | +3 |
| 100 h | +15 | +3 | +3 | 0 | 0 | 0 | 0 | +15 | +3 |
| 200 h | +15 | +6 | 0 | +3 | 0 | 0 | 0 | +15 | +3 |
| PE 200⁺  10 h | +12 | 0 | −6 | −9 | −6 | −6 | −6 | +12 | −6 |
| 50 h | +9 | 0 | −6 | −6 | −6 | −6 | −3 | +12 | −3 |
| 100 h | +12 | −3 | −6 | −3 | −6 | −6 | −6 | +12 | −3 |
| 200 h | +12 | 0 | −3 | −6 | −6 | −6 | −6 | +12 | −3 |
| % HDS  10 h | 98,1 | 98,2 | 98,7 | 97,8 | 97,7 | 97,1 | 96,8 | 71,5 | 98,9 |
| 50 h | 98,0 | 98,4 | 97,8 | 96,8 | 97,1 | 96,8 | 96,9 | 69,3 | 98,9 |
| 100 h | 97,4 | 97,8 | 97,1 | 97,9 | 96,9 | 96,7 | 95,9 | 57,5 | 98,4 |
| 200 h | 97,6 | 97,2 | 96,7 | 95,8 | 97,2 | 96,3 | 95,1 | 61,6 | 98,1 |

## Revendications

1. Catalyseur à base d'un support acide renfermant:

a) au moins 50% (calculé en base sèche) de mordénite fortement désaluminée ayant un rapport molaire $SiO_2/Al_2O_3$ supérieur à 110 et une teneur en sodium inférieure ou égale à 0,5% en poids, et

b) une matrice amorphe, ledit support acide contenant une association d'au moins un oxyde d'un métal du groupe VIII et d'au moins un oxyde d'un métal du groupe VI de la classification périodique des éléments.

2. Catalyseur selon la revendication 1 dans lequel la mordénite fortement désaluminée est caractérisée par un rapport molaire $SiO_2/Al_2O_3$ compris entre 110 et 2000.

3. Catalyseur selon l'une des revendications 1 et 2, caractérisé en ce que la teneur en zéolithe sèche du support acide avant dépôt des oxydes des métaux des groupes VI et VIII est comprise entre 55 et 90% en poids, la concentration, par rapport au catalyseur, en oxyde d'au moins un métal du groupe VI étant comprise entre 6 et 35% en poids et en oxyde d'au moins un métal du groupe VIII étant comprise etre 2 et 16% en poids.

4. Catalyseur selon l'une des revendications 1 à 3, caractérisé en ce qu'il renferme un oxyde de molybdène et un oxyde de nickel, la teneur en oxydes étant comprise entre 4 et 12% en poids pour NiO et entre 8 et 25% en poids pour $MoO_3$ (chiffres exprimés par rapport au catalyseur total).

5. Catalyseur selon l'une des revendications 1 à 3, caractérisé en ce qu'il renferme un oxyde de tungstène et un oxyde de nickel, la teneur en oxydes étant comprise entre 4 et 12% en poids pour NiO et entre 8 et 30% en poids pour $WO_3$.

6. Catalyseur selon l'une des revendications 1 à 5, caractérisé en ce que ladite mordénite acide désaluminée peut contenir jusqu'à 2% en poids de l'un au moins des métaux choisis dans le groupe constitué par le béryllium, le magnésium, le lanthane, le cérium, le néodyme et le praséodyme.

7. Catalyseur selon l'une des revendications 1 à 6, caractérisé en ce que ladite mordénite est obtenue à l'issue d'une combinaison d'au moins deux traitements différents: d'une part au moins une attaque par un acide minéral fort de concentration comprise entre 0,1 et 10N, entre 50 et 150°C et d'autre part au moins une étape de calcination entre 450 et 750°C en présence d'une pression partielle de vapeur d'eau comprise entre 40 Torr (0,053 bar) et un mégapascal (10 bar).

8. Catalyseur selon selon la revendication 7, caractérisé en ce que la combinaison des deux traitements commence par une ou plusieurs attaques acides et en ce que la première calcination est réalisée en dessous de 550°C.

9. Catalyseur selon l'une des revendications 1 à 8, dans lequel la mordénite fortement désaluminée est caractérisée par un rapport molaire $SiO_2/Al_2O_3$ d'environ 350.

10. Utilisation du catalyseur selon l'une des revendications 1 à 9, dans un procédé d'hydrotraitement pour améliorer la tenue au froid et simultanément obtenir une bonne hydrodésulfuration d'un gas-oil.

## Patentansprüche

1. Katalysator auf der Basis eines sauren Trägers, der

a) mindestens 50% (berechnet auf Trockensubstanz) stark desaluminierten Mordenit mit einem molaren Verhältnis $SiO_2/Al_2O_3$ von über 110 und einem Natriumgehalt von unter oder gleich 0,5 Gewichts-%, und

b) eine amorphe Matrix aufweist, wobei der saure Träger eine Verbindung mindestens eines Oxids eines Metalls der Gruppe VIII und mindestens eines Oxids eines Metalls der Gruppe VI des Periodensystems der Elemente enthält

2. Katalysator nach Anspruch 1, dadurch gekennzeichnet, dass der stark desaluminierte Mordenit ein molares Verhältnis $SiO_2/Al_2O_3$ zwischen 110 und 2000 aufweist.

3. Katalysator nach einem der Ansprüche 1 und 2, dadurch gekennzeichnet, dass der Gehalt an trockenem Zeolith des sauren Trägers vor der Aufbringung der Oxide der Metalle der Gruppen VI und VIII zwischen 55 und 90 Gewichts-% liegt und die Konzentrationen, jeweils bezogen auf Katalysator, an Oxid mindestens eines Metalls der Gruppe VI zwischen 6 und 35 Gewichts-% und an Oxid mindestens eines Metalls der Gruppe VIII zwischen 2 und 16 Gewichts-% betragen.

4. Katalysator nach einem der Ansprüche 1 bis 3, dadurch gekennzeichnet, dass er ein Oxid des Moylbdäns und ein Oxid des Nickels aufweist und der Gehalt an Oxiden zwischen 4 und 12 Gewichts-% für NiO und zwischen 8 und 25 Gewichts-% für $MoO_3$ (Angaben bezogen auf den gesamten Katalysator) liegt.

5. Katalysator nach einem der Ansprüche 1 bis 3, dadurch gekennzeichnet, dass er ein Oxid von Wolfram und ein Oxid von Nickel aufweist und der Gehalt an Oxiden zwischen 4 und 12 Gewichts-% für NiO und zwischen 8 und 30 Gewichts-% für $Wo_3$ liegt.

6. Katalysator nach einem der Ansprüche 1 bis 5, dadurch gekennzeichnet, dass der desaluminierte saure Mordenit bis zu 2 Gewichts-% mindestens eines der Metalle, die aus der Gruppe bestehend aus Beryllium, Magnesium, Lanthan, Cerium, Neodym und Praseodym ausgewählt sind, enthält.

7. Katalysator nach einem der Ansprüche 1 bis 6, dadurch gekennzeichnet, dass der Mordenit durch eine Kombination von mindestens zwei verschiedenen Behandlungsweisen erhalten wird, nämlich einerseits mindestens einen Angriff durch eine starke Mineralsäure einer Konzentration zwischen 0,1 und 10N zwischen 50 und 150°C und andererseits mindestens eine Kalzinierungsstufe zwischen 450 und 750°C bei einem Wasserdampfpartialdruck zwischen 40 Torr (0,053 bar) und 1 MPa (10 bar).

8. Katalysator nach Anspruch 7, dadurch gekennzeichnet, dass die Kombination der beiden Behandlungsweisen mit einem oder mehreren Säureangriffen beginnt und die erste Kalzinierung unterhalb 550°C durchgeführt wird.

9. Katalysator nach einem der Ansprüche 1 bis 8, dadurch gekennzeichnet, dass der stark desaluminierte Mordenit ein molares Verhältnis $SiO_2/Al_2O_3$ von etwa 350 aufweist.

10. Verwendung des Katalysators nach einem der Ansprüche 1 bis 9 in einem Hydrierbehandlungsverfahren zur Verbesserung der Kältebeständigkeit und gleichzeitigen Erzielung einer guten Hydrodesulfurierung eines Gasöls.

## Claims

1. A catalyst with an acid carrier base containing:

(*a*) at least 50% (calculated as dry base) of highly dealuminated mordenite and having a molar ratio $SiO_2/Al_2O_3$ higher than 110 and a sodium content lower than or equal to 0.5% by weight, and

(*b*) an amorphous matrix, said acid carrier containing in association at least one oxide of a metal from group VIII and at least one oxide of a metal from group VI of the periodic classification of elements.

2. A catalyst according to Claim 1, wherein the highly dealuminated mordenite is characterized by a molar ratio $SiO_2/Al_2O_3$ comprised between 110 and 2000.

3. A catalyst according to one of Claims 1 and 2, characterized in that the dry zeolite content of the acid carrier, before deposition of oxides of metals from groups VI and VIII, is comprised between 55 and 90% by weight, the concentration, with respect to the catalyst, in oxide of at least one metal from group VI being comprised between 6 and 35% by weight and in oxide of at least one metal from group VIII comprised between 2 and 16% by weight.

4. A catalyst according to one of Claims 1 to 3, characterized in that it contains a molybdenum oxide and a nickel oxide, the oxide content being comprised between 4 and 12% by weight for NiO and between 8 and 25% by weight for $MoO_3$ (values expressed with respect to the total catalyst).

5. A catalyst according to one of Claims 1 to 3, characterized in that it contains a tungsten oxide and a nickel oxide, the oxides content being comprised between 4 and 12% weight for NiO and between 8 and 30% by weight for $WO_3$.

6. A catalyst according to one of Claims 1 to 6, characterized in that said dealuminated acid mordenite may contain up to 2% by weight of at least one of the metals selected from the group consisting of beryllium, magnesium, lanthanum, cerium, neodymium and praseodymium.

7. A catalyst according to one of Claims 1 to 6, characterized in that said mordenite is obtained as a result of the combination of at least two different treatments: on the one hand at least one attack with a strong inorganic acid at a concentration comprised between 0.1 and 10N, at 50 to 150°C and, on the other hand, at least one calcination at 450 to 750°C, in the presence of a partial water pressure comprised between 40 torr (0.053 bar) and one megapascal (10 bar).

8. A catalyst according to Claim 7, characterized in that the combination of the two treatments begins with one or more acid attacks and in that the first calcination is performed at a temperature below 550°C.

9. A catalyst according to one of Claims 1 to 8, wherein the highly dealuminated mordenite is characterized by a molar ratio $SiO_2/Al_2O_3$ of about 350.

10. The use of a catalyst according to one of Claims 1 to 9 in a hydrotreatment process for improving the behavior of a gas-oil at cold and for simultaneously obtaining a satisfactory hydrodesulfurization.